# EUROPEAN PATENT APPLICATION

(11) **EP 2 579 484 A1**
(43) Date of publication of application: **10.04.2013**
(21) Application number: 11306220.2
(22) Date of filing: 26.09.2011
(51) Int. Cl.: H04B 10/50, H04J 14/06

(54) **Method of generating PM iNRZ-xPSK modulation format**

(71) Applicant: Alcatel Lucent, 75007 Paris (FR)
(72) Inventor: Lavigne, Bruno, 91620 NOZAY (FR); Baulin, Marc, 91620 NOZAY (FR); Charlet, Gabriel, 91620 NOZAY (FR); Renaudier, Jeremie, 91620 NOZAY (FR)
(74) Representative: Sciaux, Edmond

(57) **Abstract**

A system and method for producing a polarization multiplexed signal. The method comprises receiving a first and a second group of electrical data signal, introducing a predetermined delay between the first group of electrical data signal and the second group of electrical data signal and generating a first group and a second group of constant optical signal. The method further includes the electro-optically modulating the first group and second group of constant optical signals using the first group and second group of electrical signals, respectively, and polarization multiplexing the first group and the second group of optical signals together, such that their polarizations are orthogonal to each other.

## Description

The present invention relates to the field of optical communication networks. More particularly, the present invention relates to a method of generating a polarization-multiplexed interleaved non-return-to-zero phase shift keying (PM iNRZ-xPSK) modulated signal.

Polarization-Multiplexed xPSK modulation formats with coherent detection are currently considered by most to be the best combination of techniques for transmission beyond 40Gbit/s. In addition, the signal processing inherent to coherent detection at the receiver (Rx) side allows the definition of new dispersion map strategies. For practical implementation in real products however, new solutions must remain compatible with currently deployed systems.

In that respect, the use of the PM-NRZ-xPSK with coherent detection (named hereinafter "PM NRZ-xPSK" or "coherent channel", for sake of simplicity) suffers from cross-polarization interactions in Wavelength Division Multiplexed (WDM) environments having traditional Dispersion Managed (DM) transmission schemes.

The best way to reduce these interactions involves using PM-interleaved Return to Zero (RZ) xPSK. RZ carving reduces the size of the pulses in the temporal domain. This technique is also sometimes coupled with delaying the optical signal of one polarization with respect to the other, which results in a reduction of the interactions between the two polarizations. This solution however is costly, requiring a significantly more complex transmitter.

Another approach to reduce interaction between orthogonally polarized signals, is to use PM-interleaved NRZ-xPSK (Ex: PM iNRZ-BPSK). This known modulation format has several advantages over PM-NRZ xPSK, such as for example reduced Q-factor fluctuations without degradation in average performance. Accordingly, whilst this format may not produce a better average Q-factor, it will reduce fluctuations in Q-factor and therefore produce a signal with a better "worst case scenario" Q-factor, which will in turn allow a signal to be transmitted at a higher power.

As is the case with RZ carving, it is also possible to reduce the interaction between the polarization signals by optically delaying one polarization with respect to the other. This delay is achieved by passing the polarization multiplexed signal through a predetermined length of birefringent optical fibre, in which a signal polarized in a first direction travels slower than a signal polarized in a second direction. As will be appreciated, the process of introducing this delay using birefringent optical fibres is very complex and requires an onerous amount of precision in regard to the length of the fibre, and the orientations of the polarized signals. Any small differences in orientation or in length can have a significant impact on the quality of the transmitted signal.

In order to solve the problems associated with the prior art, the present invention provides a method of producing a polarization multiplexed signal, the method comprises:
receiving a first and a second group of electrical data signal;
introducing a predetermined delay between the first group of electrical data signal and the second group of electrical data signal;
generating a first group and a second group of constant optical signal;
electro-optically modulating the first group and second group of constant optical signals using the first group and second group of electrical signals, respectively; and
polarization multiplexing the first group and the second group of optical signals together, such that their polarizations are orthogonal to each other.

The polarization multiplexed signal is a Binary Phase Shift Keyed (BPSK) signal when each of the first and second groups of electrical signals and each of the first and second groups of optical signals include a single signal.

The polarization multiplexed signal is a Quadrature Phase Shift Keyed (QPSK) signal when each of the first and second groups of electrical signals and each of the first and second groups of optical signals include two signals.

The step of introducing a delay can be performed using software means.

Alternatively, the step of introducing a delay can be performed using a digital delay circuit.

Preferably, the delay introduced is equal to half the duration of the symbol bit of the first and second electrical signals.

The present invention also provides an apparatus for producing a polarization multiplexed signal, the apparatus comprises:
receiving means arranged to receive a first and a second group of electrical data signal;
delay means arranged to introduce a predetermined delay between the first group of electrical data signal and the second group of electrical data signal;
optical signal generating means arranged to generate a first group and a second group of constant optical signal;
modulation means arranged to electro-optically modulate the first group and second group of constant optical signals using the first group and second group of electrical signals, respectively; and
polarization multiplexing means arranged to polarization multiplex the first group and the second group of optical signals together, such that their polarizations are orthogonal to each other.

The polarization multiplexed signal is a Binary Phase Shift Keyed (BPSK) signal when each of the first and second groups of electrical signals and each of the first and second groups of optical signals include a single signal.

The polarization multiplexed signal is a Quadrature Phase Shift Keyed (QPSK) signal when each of the first and second groups of electrical signals and each of the first and second groups of optical signals include two signals.

The delay means can comprise software means.

Alternatively, the delay means can comprise a digital delay circuit.

Preferably, the delay means is further arranged to introduce a delay equal to half the duration of the symbol bit of the first and second electrical signals.

As will be appreciated, the present invention provides several advantages over the prior art. For example, the present invention provides a method and apparatus which can achieve decorrelation of polarization multiplexed signals, without the cost and complexity associated with the use of birefringent optical fibre. Moreover, the present invention is fully compliant with existing and deployed systems on the field. Deployed systems can therefore be upgraded without any hardware modification. Furthermore, the present invention can be applied to any PM xQAM modulation format.

Specific embodiments of the present invention will now be described with reference to the accompanying figures, in which:
Figure 1 represents a functional block diagram and associated timing diagram in respect of an apparatus in accordance with a first embodiment of the present invention;
Figure 2 represents a functional block diagram and associated timing diagram in respect of an apparatus in accordance with a second embodiment of the present invention;
Figure 3 is a visual representation of the Q-factor fluctuation reduction achieved when using a system in accordance with the first embodiment of the present invention; and
Figure 4 is a visual representation of the Q-factor fluctuation reduction achieved when using a system in accordance with the second embodiment of the present invention.

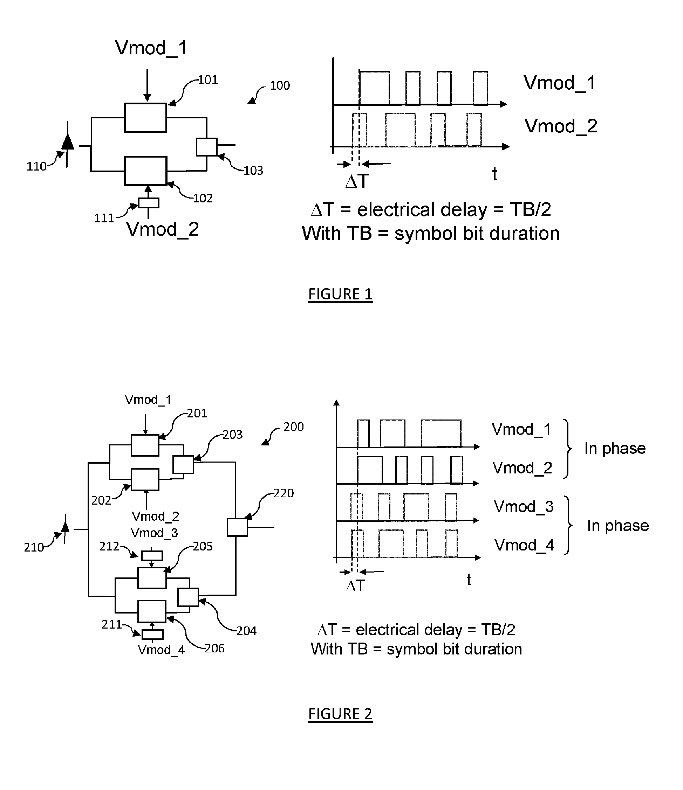

Figure 1 shows a functional block diagram of a system in accordance with a first embodiment of the present invention. The embodiment shown in Figure 1 is suitable for producing a PM iNRZ-BPSK (Binary Phase Shift Keying) modulated signal. A laser diode 110 produces a constant light signal, which is split into a first and a second optical signals, the first and the second optical signals being identical. The first and second optical signals are fed into first and second electro-optical modulators, respectively. The first electro-optical modulator 101 and the second electro-optical modulator 102 are both driven by different electrical modulation signals (Vmod**_**1 and Vmod_2, respectively), which are used to modulate the optical signals received. A non-limiting example of an electro-optical modulator is an integrated Lithium Niobate (LiNb03) modulator based on a Mach Zehnder architecture which includes one or more Mach Zehnder interferometers. Such an interferometric architecture allows the conversion of the electrical modulation signal into a phase difference (or phase modulation) between the two arms of the interferometer, which phase modulation will be carried out by the optical signal.

In accordance with the present invention, an electrical delay device 111 introduces a delay between the electrical modulation signals Vmod_1 and Vmod_2, as shown in the timing diagram of Figure 1. Preferably, the delay ΔT is equal to half the duration of a symbol bit TB. As will be appreciated by the skilled reader however, the actual delay between Vmod_1 and Vmod_2 can also be increased or decreased. The electrical delay device 111 can be implemented in hardware or software. A non-limiting example of an electrical delay device 111 is digital delay circuit.

Once the delay is introduced between modulation signals Vmod_1 and Vmod_2, these signals are used to drive electro-optical modulation devices 101 and 102, respectively. The elect-optical modulation devices 101 and 102 will modulate the optical signals produced by splitting the constant optical signal produced by laser diode 110. Because the modulation signals Vmod_1 and Vmod_2 driving the electro-optical modulation devices 101 and 102 are delayed with respect to one another, the resulting modulated optical signals will also be delayed with respect to one another. Once produced, the modulated optical signals will be multiplexed together by polarization multiplexing device 103. An example of a polarization multiplexing device 103 is an optical polarization beam combiner (PBC). The function of a polarization beam combiner (PBC) is to combine a first optical signal with a second optical signal in such a way that the produce a third optical signal having a first component at a first polarization, which first component is related to the first optical signal, and a second component at a second polarization, which second component is related to the second optical signal and which second polarization is orthogonal with respect to the first polarization. Accordingly, the polarization multiplexing device 103 will combine the two signals in such a way that the polarization of the first modulated optical signal will be orthogonal to the polarization of the second modulated optical signal. This combined signal will hereinafter be referred to as the polarization multiplexed signal, or PM iNRZ BPSK signal.

Because the changes in state (from a first binary state to a second binary state) in the first optically modulated component of the PM iNRZ-BPSK signal will be delayed with respect to the changes in state of the second optically modulated component of the PM iNRZ-BPSK signal, the resulting PM iNRZ BPSK signal will suffer less cross-polarization modulation (XPol). This will result in better system performance, because it will produce a reduction of Bit Error Rate (BER) fluctuations due to a reduction of cross-polarization effects during propagation. This reduction is particularly noticeable in the case of dispersion managed systems, in which the pulse shape of the optical transmission signal is controlled during propagation.

Figure 2 shows a functional block diagram of a system in accordance with a second embodiment of the present invention. The embodiment shown in Figure 2 is suitable for producing a PM iNRZ-QPSK (Quadrature Phase Shift Keying) modulated signal. A laser diode 210 produces a constant light signal, which is split into first, second, third and fourth optical signals, all of which being identical. The first, second third and fourth optical signals are fed into first, second, third and fourth electro-optical modulators 201, 202, 205 and 206, respectively. The first electro-optical modulator 201 and the second electro-optical modulator 202 are both driven by different electrical modulation signals (Vmod_1 and Vmod_2, respectively), which are used to modulate the optical signals received. As shown in Figure 2, signals Vmod_1 and Vmod_2 are in phase with respect to each other and Vmod_3 and Vmod_4 are also in phase with respect to each other. A non-limiting example of an electro-optical modulator is an integrated Lithium Niobate (LiNb03) modulator based on a Mach Zehnder architecture which includes one or more Mach Zehnder interferometers. Such an interferometric architecture allows the conversion of the electrical modulation signal into a phase difference (or phase modulation) between the two arms of the interferometer, which phase modulation will be carried out by the optical signal. Elements 203 and 204 are phase rotation devices which provide a phase rotation of 90° between two signals. It is to be noted that these devices effectuate phase rotation and not polarization rotation.

In accordance with the present invention, delay devices 211 and 212 introduce a delay ΔT between the group of electrical modulation signals Vmod_1 and Vmod_2 and the group of electrical modulation signals Vmod_3 and Vmod_4, as shown in the timing diagram of Figure 2. Preferably, the delay ΔT is equal to half the duration of a symbol bit TB. As will be appreciated by the skilled reader, the actual delay between the group Vmod_1 and Vmod_2 and the group Vmod_3 and Vmod_4 can also be increased or decreased. The delay devices 211 and 212 can be implemented in hardware or software, and will be readily understood by a skilled reader.

Once the delay is introduced between the groups of modulation signals Vmod_1/Vmod_2 and Vmod_3/Vmod_4, these signals are used to drive electro-optical modulation devices 201, 202, 205 and 206, respectively. The electro-optical modulation devices 201, 202, 205 and 206 will modulate the optical signals produced by splitting the constant optical signal generated by laser diode 210. Because the modulation signal groups Vmod_1/ Vmod_2 and Vmod_3/Vmod_4 driving the electro-optical modulation devices 201, 202, 205 and 206 are delayed with respect to one another, the resulting modulated optical signals will also be delayed with respect to one another. Once produced, the modulated optical signals will be multiplexed together by polarization multiplexing devices 220. This combined signal will hereinafter be referred to as the polarization multiplexed signal, or PM iNRZ QPSK signal.

Because the changes in state (from a first binary state to a second binary state) in the first and second optically modulated components of the PM iNRZ-QPSK signal will be delayed with respect to the changes in state of the third and fourth optically modulated components of the PM iNRZ-QPSK signal, the resulting PM iNRZ QPSK signal will suffer less cross-polarization interaction (XPol). As is the case with the first embodiment of the invention, described above, this will result in better system performance, because it will produce a reduction of Bit Error Rate (BER) fluctuations due to a reduction of cross-polarization effects during propagation. This reduction is particularly noticeable in the case of dispersion managed systems, in which the pulse shape of the optical transmission signal is controlled during propagation.

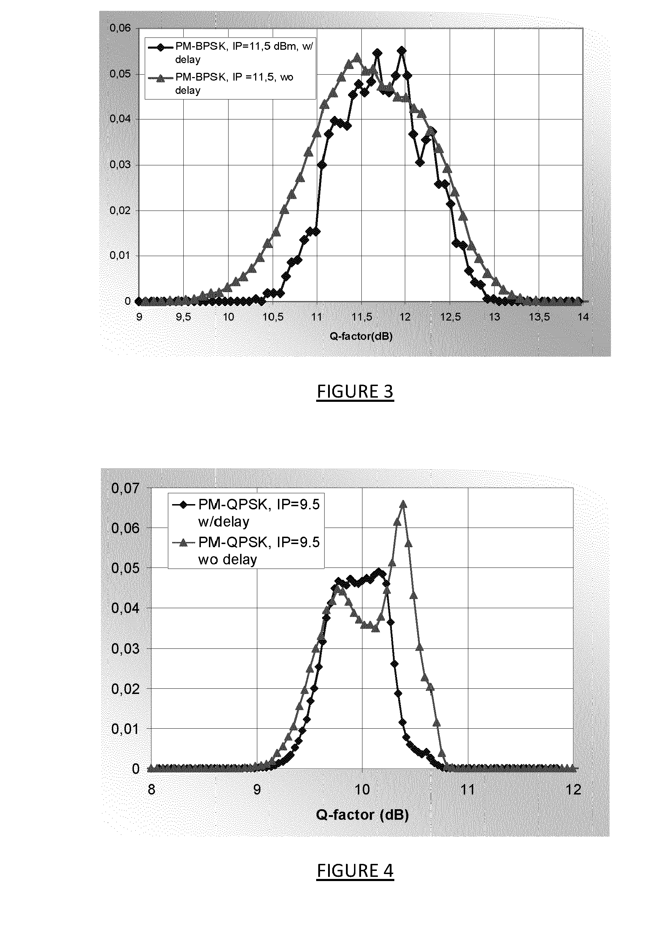

Figure 3 and 4 are visual representations of the Q-factor fluctuation reduction achieved when using systems in accordance with the first and second embodiments of the present invention, respectively. In other words, the Figures 3 and 4 represent the Q-factor fluctuation reduction when using PM iNR-ZxPSK as compare to pure PM NRZ-xPS. Figure 3 shows a curb of PM iNRZ(squares)/NRZ-BPSK(triangles), where it can be seen that the min-max ΔQ fluctuations are reduced from 4.3 dB (Pure NRZ) to 2.8 dB (iNRZ). Similarly, Figure 4 shows a curb of PM iNRZ(squares)/NRZ-QPSK(triangles) where it can be seen that the min-max ΔQ fluctuations are reduced from 2.3 dB (Pure NRZ) to 1.9 dB (iNRZ).

Other embodiments of the present invention are possible. For example, other PSK arrangements could be used. Moreover, a person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof. It should be appreciated by those skilled in the art that any block diagrams herein represent conceptual views of illustrative circuitry embodying the principles of the invention.

## Claims

1. A method of producing a polarization multiplexed signal, the method comprising:
receiving a first and a second group of electrical data signal;
introducing a predetermined delay between the first group of electrical data signal and the second group of electrical data signal;
generating a first group and a second group of constant optical signal;
electro-optically modulating the first group and second group of constant optical signals using the first group and second group of electrical signals, respectively; and
polarization multiplexing the first group and the second group of optical signals together, such that their polarizations are orthogonal to each other.

2. The method of claim 1, wherein the polarization multiplexed signal is a Binary Phase Shift Keyed (BPSK) signal and each of the first and second groups of electrical signals and each of the first and second groups of optical signals include a single signal.

3. The method of claim 1, wherein the polarization multiplexed signal is a Quadrature Phase Shift Keyed (QPSK) signal and each of the first and second groups of electrical signals and each of the first and second groups of optical signals include two signals.

4. The method of any of the preceding claims, wherein the step of introducing a delay is performed using software means.

5. The method of any of claims 1 to 3, wherein the step of introducing a delay is performed using a digital delay circuit.

6. The method of any of the preceding claims, wherein the delay introduced is equal to half the duration of the symbol bit of the first and second electrical signals.

7. An apparatus for producing a polarization multiplexed signal, the apparatus comprising:
receiving means arranged to receive a first and a second group of electrical data signal;
delay means arranged to introduce a predetermined delay between the first group of electrical data signal and the second group of electrical data signal;
optical signal generating means arranged to generate a first group and a second group of constant optical signal;
modulation means arranged to electro-optically modulate the first group and second group of constant optical signals using the first group and second group of electrical signals, respectively; and
polarization multiplexing means arranged to polarization multiplex the first group and the second group of optical signals together, such that their polarizations are orthogonal to each other.

8. The apparatus of claim 7, wherein the polarization multiplexed signal is a Binary Phase Shift Keyed (BPSK) signal and each of the first and second groups of electrical signals and each of the first and second groups of optical signals include a single signal.

9. The apparatus of claim 8, wherein the polarization multiplexed signal is a Quadrature Phase Shift Keyed (QPSK) signal and each of the first and second groups of electrical signals and each of the first and second groups of optical signals include two signals.

10. The apparatus of any of claims 7 to 9, wherein the delay means comprise software means.

11. The apparatus of any of claims 7 to 9, wherein delay means comprise a digital delay circuit.

12. The apparatus of any of claims 7 to 11, wherein the delay means is further arranged to introduce a delay equal to half the duration of the symbol bit of the first and second electrical signals.

## Amended claims

### Amended claims in accordance with Rule 137(2) EPC.

**1.** A method of producing a polarization multiplexed signal, the method comprising:
receiving a first and a second group of electrical data signals;
introducing a predetermined delay between the first group of electrical data signals and the second group of electrical data signals; wherein the delay introduced is equal to half the duration of the symbol bit of the first and second group of electrical signals,
generating a first group and a second group of constant optical signals;
electro-optically modulating the first group and second group of constant optical signals using the first group and second group of electrical signals, respectively,; and
polarization multiplexing the first group and the second group of optical signals together, such that their polarizations are orthogonal to each other,
**characterized in that** each of the first and second groups of electrical data signals includes two NRZ-coded electrical signals in phase with one another and each of the first and second groups of optical signals includes two optical signals,
wherein the electro-optically modulating of each constant optical signals is done with an electro-optical modulator (201, 202, 205, 206) comprising a Mach-Zehnder interferometer arranged to convert a respective one of the NRZ-coded electrical data signals into phase differences between two arms of the Mach-Zehnder interferometer,
the method comprising providing a phase rotation of 90° between the two optical signals of a same group to generate a first NRZ-QPSK optically modulated component from the first group of optical signals and a second NRZ-QPSK optically modulated component from the second group of optical signals, and
wherein a polarization multiplexed interleaved NRZ QPSK optical signal is produced.

**2.** The method of the preceding claim, wherein the step of introducing a delay is performed using software means.

**3.** The method of claim 1, wherein the step of introducing a delay is performed using a digital delay circuit.

**4.** An apparatus for producing a polarization multiplexed signal, the apparatus comprising:
receiving means arranged to receive a first and a second group of electrical data signals;
delay means arranged to introduce a predetermined delay between the first group of electrical data signals and the second group of electrical data signals; wherein the delay means is arranged to introduce a delay equal to half the duration of the symbol bit of the first and second group of electrical signals,
optical signal generating means arranged to generate a first group and a second group of constant optical signals;
modulation means arranged to electro-optically modulate the first group and second group of constant optical signals using the first group and second group of electrical signals, respectively; and
polarization multiplexing means arranged to polarization multiplex the first group and the second group of optical signals together, such that their polarizations are orthogonal to each other,
**characterized in that** each of the first and second groups of electrical data signals includes two NRZ-coded electrical signals in phase with one another and each of the first and second groups of optical signals includes two optical signals,
wherein the modulation means comprise a respective electro-optical modulator (201, 202, 205, 206) for each constant optical signal, the electro-optical modulator comprising a Mach-Zehnder interferometer arranged to convert a respective one of the NRZ-coded electrical data signals into phase differences between two arms of the Mach-Zehnder interferometer,
the apparatus further comprising phase rotation devices (203, 204) arranged for providing a phase rotation of 90° between the two optical signals of a same group to generate a first NRZ-QPSK optically modulated component from the first group of optical signals and a second NRZ-QPSK optically modulated component from the second group of optical signals, and
wherein the apparatus is adapted to produce a polarization multiplexed interleaved NRZ QPSK optical signal.

**5.** The apparatus of claim 4, wherein the delay means comprise software means.

**6.** The apparatus of claim 4, wherein delay means comprise a digital delay circuit.
